# DEMANDE DE BREVET EUROPEEN

(11) **EP 3 772 715 A1**
(43) Date de publication de la demande: **10.02.2021**
(21) Numéro de dépôt: 20189911.9
(22) Date de dépôt: 06.08.2020
(51) Int. Cl.: G06Q 10/08, G06Q 10/00, G06Q 50/08

(54) **PROCEDE D'IDENTIFICATION DE SAC A DECHETS, ET SYSTEME**

(30) Priorité: 07.08.2019 FR 1909061
(71) Demandeur: Sefion, Youssef, 95170 Deuil la Barre (FR)
(72) Inventeur: Sefion, Youssef, 95170 Deuil la Barre (FR)
(74) Mandataire: Fidal Innovation

(57) **Abrégé**

Le système comprend : une pluralité de sacs (1) conteneurs de déchets, de volume utile supérieur à 1 décimètre cube, et muni d'une enveloppe (2) souple.

Les sacs comprennent une étiquette d'identification (8) qui porte un identifiant associé au sac (1), et pouvant être lu par un système de lecture (17, 18).

Le système comprend en outre une base de données (12) qui associe des identifiants associés au sac (1) avec des informations relatives à l'achat du sac.

## Description

### DOMAINE DE L'INVENTION

La présente invention se rapporte à un système comprenant des sacs conteneurs de déchets, chaque sac comprenant une enveloppe souple.

### ARRIERE-PLAN TECHNOLOGIQUE

Plus précisément, l'invention se place dans le domaine du traitement des déchets de chantier. Sur les chantiers, notamment les chantiers de bâtiments et travaux publics, notamment les chantiers de destruction ou de rénovation, on génère un volume colossal de déchets. Ces déchets sont classiquement emballés dans des sacs, de manière à pouvoir être déplacés et traités efficacement ultérieurement. Ces sacs sont par exemple des sacs à gravats. Le cas échéants, les déchets peuvent être placés dans des sacs plus volumineux, dits « big bags ». Ces sacs présentent pour particularité de présenter une enveloppe souple permettant d'accommoder des déchets de forme variable, mais néanmoins résistante, de manière à stocker un contenu lourd, et de pouvoir être manipulés, quand pleins, à la main, ou par engins. Par conséquent, ils peuvent inclure divers systèmes de préhension. Ces sacs présentent également pour particularité de présenter une ouverture large, eu égard à leurs dimensions, permettant d'y insérer facilement des objets volumineux. L'ouverture peut être refermable, ou partiellement refermable, après emplissage du sac, ou non.

Les sacs pleins de déchets doivent être recyclés en déchetterie. Toutefois, le traitement en déchetterie est onéreux, et peut être compliqué, de manière logistique, de sorte que les propriétaires de sacs de déchets pleins peu scrupuleux peuvent être amenés à escamoter les déchets dans des endroits non prévus à cet effet. Ce comportement est problématique, d'un point de vue écologique, vis-à-vis de la faune, de la flore, et également d'un point de vue sanitaire, dans la mesure où elle place des particuliers en contact potentiel avec les déchets, qui peuvent par exemple être toxiques, contenir de l'amiante, du plomb, etc...

Les collectivités peuvent pallier à ce problème en conduisant les déchets trouvés en dépôts sauvages vers les déchetteries, mais ne sont souvent pas bien équipées pour le faire. De plus, le coût est supporté par le contribuable.

Une solution pourrait consister en l'installation d'un système de localisation dans le sac de déchets. C'est d'ailleurs la solution retenue, dans un autre domaine, dans JP 2005/022,852. Ce document prévoit d'installer des puces de localisation globale par satellite dans des poubelles, afin de s'assurer, à tout moment, de la position de la poubelle.

Cette solution n'est toutefois pas adaptée au problème mentionné ci-dessus. D'une part, l'installation d'une puce est plus facile dans une poubelle, qui comprend des composants rigides pérennes aptes à la protéger, que dans un sac. D'autre part, la fonctionnalité permettant de tracer à tout moment le produit par satellite est complexe et onéreux sans réelle nécessité : il utilise des données satellite, consomme de l'énergie, et fournit des informations qui, pour l'essentiel, sont inutiles, car le plus souvent la poubelle est à l'endroit où elle doit être.

Il est également connu de munir un sac poubelle d'une puce. Un exemple est donné dans WO 2013/069,029. Un conteneur est alors muni d'un lecteur qui peut lire les informations contenues sur la puce. DE 10 2017 222 319 décrit une variante de réalisation. CN 106 904 385 décrit également un conteneur adapté pour lire des informations portées par des puces solidaires de sacs. Toutefois, une telle solution ne permet pas de lutter contre les dépôts sauvages.

Il existe donc le besoin d'une solution économe et adaptée pour limiter le dépôt sauvage de sacs de déchets, par exemple en bord de route, en forêt, en espace vert, en parc, sur une aire de repos, etc....

### RESUME DE L'INVENTION

Ainsi, l'invention se rapporte à un système comprenant :
- une pluralité de sacs conteneurs de déchets, chacun de volume utile au moins égal à 0,5 m³, chaque sac comprenant une enveloppe souple,
**caractérisé en ce que** chaque sac comprend en outre une étiquette d'identification portant un identifiant associé au sac, et lisible par un système de lecture associé à la pluralité de sacs,
**en ce que** le système comprend en outre une base de données accessible à distance, et associant des identifiants associés au sac avec des informations relatives à l'achat du sac,
**en ce que** le système comprend en outre un système informatisé d'acquisition adapté pour renseigner, dans la base de données, des informations relatives à l'achat du sac associées à l'identifiant,
**en ce que le système** comprend en outre au moins un système de lecture portatif adapté pour lire les étiquettes d'identification,
**et en ce que** le système comprend en outre au moins un serveur ayant accès à la base de données, et accessible par le système de lecture portatif, le serveur étant adapté pour associer un identifiant du sac lu par un système de lecture portatif et des informations de la base de données relatives à l'achat du sac associé.

Grâce à ces dispositions, on ne connait pas nécessairement la position du sac à tout moment, ce qui est inutile pour le but recherché, mais on sait que, si le sac est retrouvé, il sera possible d'accéder à des informations relatives au sac. Cette possibilité devrait restreindre le propriétaire du sac de se livrer à un abandon sauvage de celui-ci.

Selon différents aspects, il est possible de prévoir l'une et/ou l'autre des dispositions ci-dessous.

Selon une réalisation, l'étiquette d'identification est dissimulée dans le sac.

Selon une réalisation, les informations relatives à l'achat du sac comprennent l'une et/ou l'autre des informations suivantes :
- une identification du propriétaire du sac, comprenant notamment l'une et ou l'autre d'un nom, d'une adresse, d'une identification bancaire du propriétaire,
- une date d'achat et/ou un identifiant du vendeur du sac.

Selon une réalisation, une pluralité de sacs sont contenus dans un emballage commun muni d'une étiquette d'identification, et dans lequel la base de données associe l'étiquette d'identification de l'emballage commun avec les identifiants des sacs contenus dans l'emballage commun.

Selon un autre aspect, l'invention se rapporte à un procédé d'identification de sac, dans lequel :
- on dispose d'au moins un sac conteneur de déchets parmi une pluralité de sacs, chacun de volume utile au moins égal à 1 décimètre cube (dm³), notamment au moins égal à 50 dm³, et optionnellement au moins égal à 0,5 m³, chaque sac comprenant une enveloppe souple, et une étiquette d'identification portant un identifiant associé au sac, et lisible par un système de lecture associé à la pluralité de sacs,
- un système informatisé d'acquisition renseigne, dans une base de données accessible à distance, des informations relatives à l'achat du sac associées à l'identifiant,
- quand on retrouve un sac en un lieu inapproprié, on lit par un système de lecture portatif l'étiquette d'identification du sac et,
- on associe, par une base de données accessible à distance, un identifiant lu associé au sac avec des informations relatives à l'achat du sac.

Selon un autre aspect, l'invention se rapporte à un procédé de fabrication d'une base de données de sacs conteneurs de déchets, dans lequel :
- on dispose d'au moins un sac conteneur de déchets parmi une pluralité de sacs, chacun de volume utile au moins égal à 1 décimètre cube (dm³), notamment au moins égal à 50 dm³, et optionnellement au moins égal à 0,5 m³, chaque conteneur comprenant une enveloppe souple, et une étiquette d'identification portant un identifiant associé au sac, et lisible par un système de lecture associé à la pluralité de sacs,
- on renseigne dans la base de données, par un système informatisé d'acquisition, des informations relatives à l'achat du sac associées à l'identifiant.

Selon un autre aspect, l'invention se rapporte à un programme d'ordinateur comprenant des instructions permettant la mise en oeuvre du procédé lorsqu'il est exécuté par un processeur.

### BREVE DESCRIPTION DES DESSINS

Des modes de réalisation de l'invention seront décrits ci-dessous par référence aux dessins, décrits brièvement ci-dessous :
[Fig. 1] représente un premier exemple de réalisation de sac.
[Fig. 2] représente un deuxième exemple de réalisation de sac.
[Fig. 3] est une vue schématique d'un système selon un mode de réalisation.
[Fig. 4] est une vue schématique d'un autre exemple de réalisation.

Sur les dessins, des références identiques désignent des objets identiques ou similaires.

### DESCRIPTION DETAILLEE

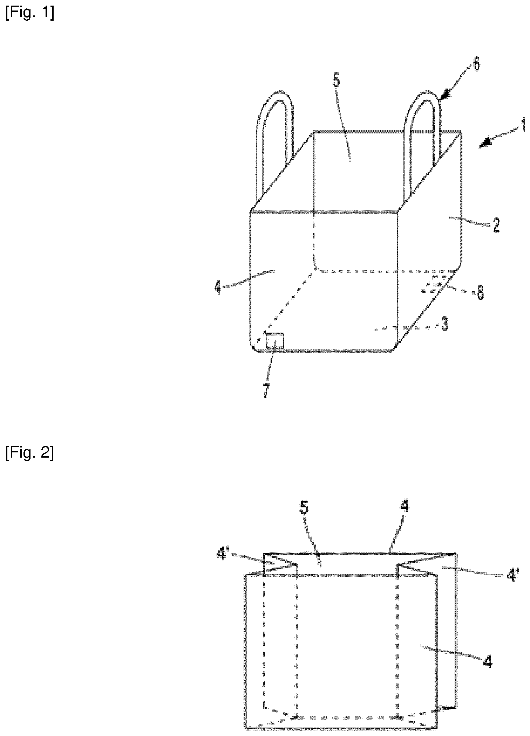

La figure 1 représente schématiquement un sac 1 conteneur de déchets selon un mode de réalisation de l'invention. Le sac 1 est par exemple un sac de grand volume utile, communément appelé par l'appellation anglaise « big bag », de volume utile au moins égal à 0,5 mètres cubes (m³). De tels « big bag » existent communément dans des volumes supérieurs à 0,5 m³, comme par exemple au moins 0,7 m³, au moins 1 m³, et parfois jusqu'à 2 m³.

Le sac 1 de la figure 1 présente une enveloppe 2 souple. L'enveloppe 2 souple est réalisée en matériaux résistants, aptes à supporter le poids du contenu, qui peut être important pour les sacs de grand volume. Le cas échéant, l'enveloppe 2 peut être renforcée par des renforts (non représentés), par exemple des bandes rigides en matériaux résistants, placés en des emplacements adaptés. La masse du contenu peut atteindre 50 kilogrammes (kg), voire 100 kgs, voire encore 200 kgs, 500 kgs, ou même une tonne. De plus, l'enveloppe 2 est souple de manière à pouvoir se déformer pour accepter des objets contenus de forme variées, avec des coins ou des arêtes plus ou moins saillantes, sans se déchirer. Des matériaux acceptables pour le sac 2 sont par exemple des toiles en polypropylène d'au moins 150 grammes par mètre carré (g/m²).

Comme représenté sur la figure 1, le sac 1 peut présenter une architecture de forme cubique, présentant un fond 3 dont s'étendent un ou plusieurs côtés latéraux 4. Le fond a par exemple une forme polygonale, rectangulaire ou carrée, et le nombre et la configuration des bords latéraux dépend de cette forme. En particulier, le sac 1 présente une grande ouverture 5, du côté opposé au fond 2. L'ouverture est par exemple de surface égale, ou du moins supérieure à 50% de la superficie du fond 2. Cette grande ouverture permet de placer facilement dans le sac 1 des déchets volumineux.

Le sac 1 peut également comprendre un système de préhension 6 permettant de faciliter sa préhension et sa manipulation. La figure 1 représente deux anses opposées, fixées à deux côtés latéraux 4 opposés, mais d'autres réalisations sont possibles.

Le sac est adapté pour le stockage de produits secs non dangereux, comme par exemple des poudres, sables, engrais, graines, granulés plastiques, gravats, etc... Ainsi, bien que le sac 1 est présenté comme un sac conteneur de déchets dans le cadre de la présente invention, celle-ci vise à prévenir la décharge sauvage de sacs à un moment où ceux-ci contiennent des déchets. Ceci ne présage pas d'utilisations antérieures du sac pour contenir des matériaux autres que des déchets.

D'autres configurations de sacs sont possibles dans le cadre de l'invention. On peut par exemple prévoir, comme représenté sur la figure 2 dans une configuration à vide, un sac 1 présentant deux côtés latéraux 4 principaux parallèles reliés entre eux par une extrémité opposée à l'ouverture 5, et reliés entre eux par des côtés latéraux à soufflets 4' aptes à être écartés pour la mise en volume du sac. Ce sac présente typiquement un volume d'au moins 50 dm³, voire au moins 100 dm³, ou même 200 dm³. Il peut par exemple être réalisé en toile.

Comme représenté sur la figure 1, le sac 1 peut présenter une étiquette 7 visible, de type code-barres ou QR-code, qui peut être utilisée lors de l'achat du sac 1. Lors de l'achat du sac 1, l'étiquette 7 est lue en caisse par le caissier, et l'identifiant associé à l'étiquette permet au logiciel de caisse de prendre en compte cet article, ainsi que le prix associé. Une telle étiquette 7 n'est, le plus souvent, pas propre à un produit, mais à un ensemble de produits identiques répondant aux mêmes caractéristiques de produits. Comme cela sera décrit plus loin, le sac 1 ne comprend pas nécessairement une telle étiquette 7, par exemple quand le sac 1 est acheté en faisant partie d'un lot, comme cela sera détaillé plus loin.

En revanche, le sac 1 conforme à l'invention comporte une étiquette d'identification 8. L'étiquette d'identification 8 est unique pour chaque sac.

L'étiquette d'identification 8 peut être réalisée en utilisant l'une et/ou l'autre des technologies suivantes :
- Code-barre muni d'un code alpha-numérique,
- Code optique bi-dimensionnel de type QR-code ou autre,
- Puce électronique et magnétique, de type permettant son identification par radiofréquence (étiquette munie d'une puce et d'une antenne),
- Code couleur.

L'étiquette d'identification 8 peut être intégrée dans le sac 1, par exemple sur la face extérieure de l'enveloppe, ou sur la face intérieure de l'enveloppe. En variante, elle peut être assemblée au sac 1 par tout moyen adapté, comme par exemple par couture ou soudure. Selon un exemple de réalisation, elle est imprimée, par exemple imprimée sur la toile du sac.

Elle est par exemple disposée en un endroit accessible par un lecteur même lorsque le sac 1 est plein de déchets. Le cas échéant, on dispose plusieurs étiquettes d'identification identiques dans le même sac en des endroits différents.

Selon un mode de réalisation, l'étiquette d'identification 8 est dissimulée. Elle est par exemple masquée par un adhésif rapporté, ou fixée entre deux pans de toile superposés pour leur assemblage, glissée dans un rabat et fixée à celui-ci par couture, ou autre. Par exemple, un premier pan de toile présente une première portion de bord et un deuxième pan de toile présente une deuxième portion de bord qui sont superposées selon une bande longitudinale cousue sur ses deux bords longitudinaux, et l'étiquette d'identification est disposée entre les deux pans à dans la bande.

L'étiquette d'identification 8 comporte un identifiant lisible par un système de lecture associé. Le système de lecture en question, que ce soit le lecteur 17 ou le lecteur 18 décrits plus loin, sont associés à la technologie de codage d'information utilisée dans l'étiquette d'identification 8.

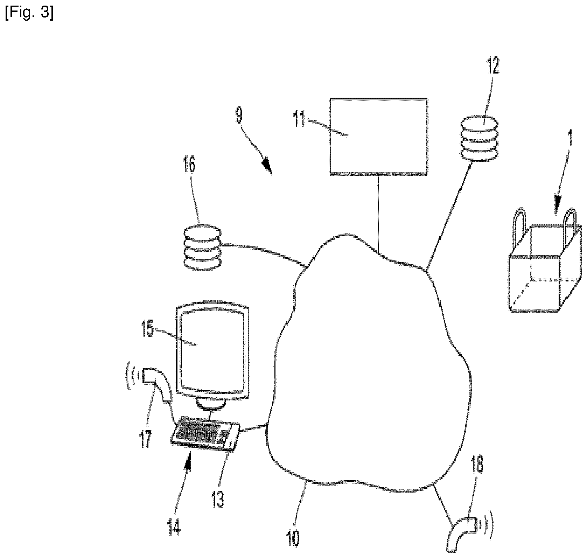

La figure 3 représente schématiquement une vue d'ensemble d'un système 9 correspondant à un mode de réalisation particulier de l'invention.

Le système 9 comprend divers composants, qui seront décrits plus loin, susceptibles d'intéragir par l'intermédiaire d'un réseau 10, comme par exemple le réseau Internet.

Le système 9 comprend un serveur 11. Le serveur 11 accède à une base de données 12. Dans la base de données 12 sont stockées des entrées relatives aux sacs 1. Notamment, pour un sac 1 donné, les entrées suivantes peuvent être renseignées :
- un identifiant de l'étiquette d'identification 8,
- une caractéristique physique du sac 1, telle que, par exemple, le nom, le type, les dimensions, la contenance, le matériau constitutif,
- une identification du propriétaire du sac 1, notamment le nom, une immatriculation d'entreprise, et un moyen de communication comme une adresse postale, un numéro de téléphone et/ou une adresse de courrier électronique, voire une identification bancaire,
- une information relative à l'achat du sac 1, notamment une date d'achat, un prix d'achat et/ou un identifiant du vendeur ou distributeur, notamment le nom, une immatriculation d'entreprise, et un moyen de communication comme une adresse postale, un numéro de téléphone et/ou une adresse de courrier électronique,
- un statut.

Le système 9 comprend également un module d'interfaçage 13 avec un système de caisse 14 d'un vendeur/distributeur de sacs 1. Le système de caisse 14 du vendeur/distributeur est par exemple un système de caisse classique comprenant une interface vendeur 15 permettant de saisir des informations relatives à l'achat du sac 1. Cette interface vendeur 15 comprend notamment un moyen de lecture de l'étiquette 7 du sac 1, et l'accès à une base de données magasin 16 stockant les informations nécessaires à l'achat du sac 1, à savoir notamment :
- un identifiant de l'étiquette 7,
- une caractéristique physique du sac 1, telle que, par exemple, le nom, le type, les dimensions, la contenance, le matériau constitutif,
- le prix d'achat.

Rappelons ici que l'interface vendeur 15 d'un distributeur peut également être adaptée pour la saisie d'informations relatives à l'acheteur, notamment pour la génération d'une facture à un acheteur professionnel. Ainsi, notamment, l'interface vendeur est adaptée pour la saisie dans la base de données magasin 16 d'informations telles que :
- une identification de l'acheteur, notamment le nom, une immatriculation d'entreprise, et un moyen de communication comme une adresse postale, un numéro de téléphone et/ou une adresse de courrier électronique, voire une identification bancaire.

Ces informations peuvent être saisies par le vendeur via une interface dédiée, ou retrouvées à partir de la base de données magasin 16 si le l'acheteur est un client préenregistré dans celle-ci. Le cas échéant, cette saisie ou cette recherche peut être faite par l'intermédiaire d'un dispositif identifiant de l'acheteur, lisible par un dispositif associé, du type carte client ou carte de fidélité.

Le module d'interfaçage 13 est adapté pour saisir l'identifiant unique du sac 1, porté par l'étiquette d'identification 8. Pour cela, le module d'interfaçage 13 peut comprendre un lecteur 17 adapté pour lire l'étiquette d'identification 8. Il peut, le cas échéant, s'agir du même lecteur que celui utilisé en caisse pour lire les articles achetés.

L'ensemble des moyens de saisie d'informations relatives au sac et à son achat, et de stockage de ces informations dans la base de données 12 constitue un système d'acquisition.

Une fois l'achat validé, le module d'interfaçage 13 est adapté pour transmettre à la base de données 12, le cas échéant par l'intermédiaire du serveur 11, des informations relatives au sac 1 acheté, à savoir :
- un identifiant de l'étiquette d'identification 8, telle qu'obtenue du lecteur 17,
- une caractéristique physique du sac 1, telle que, par exemple, le nom, le type, les dimensions, la contenance, le matériau constitutif, telle qu'obtenue de la base de données magasin 16
- une identification du propriétaire du sac 1, obtenue en tant que données d'identification de l'acheteur, notamment le nom, une immatriculation d'entreprise, et un moyen de communication comme une adresse postale, un numéro de téléphone et/ou une adresse de courrier électronique, voire une identification bancaire,
- une information relative à l'achat du sac 1, notamment une date d'achat, un prix d'achat et/ou un identifiant du vendeur ou distributeur, notamment le nom, une immatriculation d'entreprise, et un moyen de communication comme une adresse postale, un numéro de téléphone et/ou une adresse de courrier électronique.

Ces informations associées sont stockées dans la base de données 12.

Le serveur 11 peut également passer le statut du sac 1 à « acheté » (ou autre formulation) dans la base de données 12.

En variante, le sac n'est pas nécessairement acheté, mais peut être donné ou fourni à son propriétaire, par exemple par un organisme ou une collectivité. Le système de renseignement de la base de données peut être également utilisé dans ce cas. Les « informations relatives à l'achat » du sac couvrent tout mode d'obtention, payant ou non, du sac par son propriétaire.

Le sac est ensuite utilisé par son propriétaire.

Le système 9 comprend en outre un ou plusieurs lecteurs 18. De tels lecteurs 18 sont par exemple disponibles dans les déchetteries. Un utilisateur du lecteur 18 peut utiliser le lecteur 18 pour lire l'étiquette d'identification 8. Le lecteur 18 communique avec le serveur 11, afin d'identifier, dans la base de données 12, le sac 1 correspondant à l'étiquette d'identification 8. Si, par exemple, dans la déchetterie, le sac1 a vocation à être détruit ou recyclé, la déchetterie le notifie au serveur 11, qui peut prendre toute action appropriée, comme par exemple modifier le statut du sac associé en « détruit », voire supprimer l'entrée associée au sac 1 dans la base de données.

Le lecteur 18 peut par exemple comprendre un smartphone muni d'un capteur optique, et d'une application capable de lire l'étiquette d'identification 8, ou tout autre exemple de lecteur portatif.

Le présent système est adapté à la lutte contre le dépôt illégal du sac 1 plein de déchets.

Si quelqu'un, par exemple un prestataire de voirie retrouve le sac 1 en un lieu inapproprié, comme par exemple sur la voie publique, il peut, s'il est muni d'un lecteur 18 portatif lire l'identifiant du sac 1. S'il n'est pas muni d'un lecteur 1, il peut contacter un tiers muni d'un lecteur 18, aux coordonnées lisibles sur le sac 1, ou accessibles autrement, par exemple sur une page internet associé aux sacs reconnaissables par une marque de fabrique. Par l'intermédiaire du lecteur 18, l'identifiant de l'étiquette d'identification 8 est reconnu, et les informations relatives au sac 1 associé à cet identifiant sont obtenues par le serveur 11 dans la base de données 12. Si l'étiquette d'identification 8 est escamotée, celle-ci est retrouvée par le porteur du lecteur 18. Par exemple, le rabat est décousu pour permettre d'accéder à l'étiquette. Le cas échéant, le lecteur 18 est capable de lire l'étiquette d'identification à travers le matériau constitutif du sac 1. En particulier, le serveur 11 accède à l'identification du propriétaire du sac 1, notamment le nom, une immatriculation d'entreprise, et un moyen de communication comme une adresse postale, un numéro de téléphone et/ou une adresse de courrier électronique. Le serveur 11 peut alors communiquer ces informations à tout tiers intéressé, comme une administration, une collectivité, une entreprise privée, etc... pour traitement ultérieur.

Ainsi, selon un aspect, l'invention se rapporte à un système comprenant un ensemble de sacs à déchets, chaque sac à déchet comprenant un identifiant unique.

L'invention peut également être mise en oeuvre pour des déchets industriels.

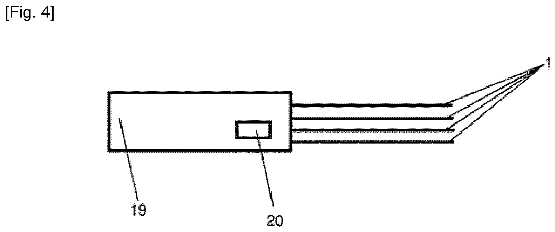

Selon un deuxième mode de réalisation, comme représentés sur la figure 4, les sacs 1 sont vendus par lots. Dans ce cas, on prévoit un emballage 19 qui contient ou assemble les sacs 1 d'un même lot. Les sacs 1 sont représentés pliés sur cette figure. L'emballage 19 est muni d'une étiquette d'identification 20 visible.

A la fabrication, les étiquettes d'identification 8 des sacs 1 sont associées à l'étiquette d'identification 20 de l'emballage 19 dans la base de données. Dans cet exemple, soit les étiquettes d'identification 8 de tous les sacs 1 sont distinctes, soit les étiquettes d'identification 8 de tous les sacs 1 d'un même lot sont identiques.

Au passage en caisse, au lieu de lire l'étiquette d'identification 8 de chaque sac 1, qui n'est pas nécessairement accessible, le lecteur 17 lit l'étiquette d'identification 20. Etant donné que celle-ci est associée, dans la base de données, à l'identifiant associé à chaque sac, il est possible d'associer à l'étiquette d'identification 8 d'un sac du lot les caractéristiques à associer, relatives à l'acquéreur ou à l'achat, comme décrit ci-dessus.

En pratique, l'invention relative à la lutte contre le dépôt sauvage peut être mise en œuvre pour d'autres types de sacs à déchets, de volume au moins égal à 1 dm³, typiquement au moins 5 dm³, 10 dm³, 20 dm³, 50 dm³ ou 100 dm³. De tels sacs peuvent par exemple être réalisés en plastique, et avoir une ouverture partiellement refermable.

**Références**

| | |
|---|---|
| Sac | 1 |
| Enveloppe | 2 |
| Fond | 3 |
| Côtés latéraux | 4, 4' |
| Ouverture | 5 |
| Système de préhension | 6 |
| Etiquette | 7 |
| Etiquette d'identification | 8 |
| Système | 9 |
| Réseau | 10 |
| Serveur | 11 |
| Base de données | 12 |
| Module d'interfaçage | 13 |
| Système de caisse | 14 |
| Interface vendeur | 15 |
| Base de données magasin | 16 |
| Lecteur | 17 |
| Lecteur | 18 |
| Emballage | 19 |
| Etiquette d'identification | 20 |

## Revendications

1. Système comprenant :
- une pluralité de sacs (1) conteneurs de déchets, chacun de volume utile au moins égal à 0,5 m³, chaque sac comprenant une enveloppe (2) souple,
**caractérisé en ce que** chaque sac comprend en outre une étiquette d'identification (8) portant un identifiant associé au sac (1), et lisible par un système de lecture (17, 18),
**en ce que** le système comprend en outre une base de données (12) accessible à distance, et associant des identifiants associés au sac (1) avec des informations relatives à l'achat du sac,
**en ce que** le système comprend en outre un système informatisé d'acquisition adapté pour renseigner, dans la base de données (12), des informations relatives à l'achat du sac associées à l'identifiant,
**en ce que le système** comprend en outre au moins un système de lecture portatif (18) adapté pour lire les étiquettes d'identification (8),
**et en ce que** le système comprend en outre au moins un serveur (11) ayant accès à la base de données (12), et accessible par le système de lecture portatif (18), le serveur étant adapté pour associer un identifiant du sac lu par un système de lecture portatif (18) et des informations de la base de données relatives à l'achat du sac associé.

2. Système selon la revendication 1, dans lequel l'étiquette d'identification (8) est dissimulée dans le sac.

3. Système selon la revendication 1 ou 2, dans lequel les informations relatives à l'achat du sac comprennent l'une et/ou l'autre des informations suivantes :
- une identification du propriétaire du sac, comprenant notamment l'une et ou l'autre d'un nom, d'une adresse, d'une identification bancaire du propriétaire,
- une date d'achat et/ou un identifiant du vendeur du sac.

4. Système selon l'une quelconque des revendications 1 à 3, dans lequel une pluralité de sacs (1) sont contenus dans un emballage (19) commun muni d'une étiquette d'identification (20), et dans lequel la base de données (12) associe l'étiquette d'identification (20) de l'emballage (19) commun avec les identifiants des sacs (1) contenus dans l'emballage (19) commun.

5. Procédé d'identification de sac, dans lequel :
- on dispose d'au moins un sac (1) conteneur de déchets parmi une pluralité de sacs, chacun de volume utile au moins égal à 1 décimètre cube, notamment au moins égal à 50 dm³, et optionnellement au moins égal à 0,5 m³, chaque sac comprenant une enveloppe (2) souple, et une étiquette d'identification (8) portant un identifiant associé au sac, et lisible par un système de lecture (17, 18) associé à la pluralité de sacs,
- un système informatisé d'acquisition renseigne, dans une base de données (12) accessible à distance, des informations relatives à l'achat du sac associées à l'identifiant,
- quand on retrouve un sac en un lieu inapproprié, on lit par un système de lecture portatif (18) l'étiquette d'identification (8) du sac (1) et,
- on associe, par la base de données (12), un identifiant lu associé au sac avec des informations relatives à l'achat du sac.

6. Procédé de fabrication d'une base de données de sacs conteneurs de déchets, dans lequel :
- on dispose d'au moins un sac (1) conteneur de déchets parmi une pluralité de sacs, chacun de volume utile au moins égal à 1 décimètre cube (dm³), notamment au moins égal à 50 dm³, et optionnellement au moins égal à 0,5 m³, chaque conteneur comprenant une enveloppe (2) souple, et une étiquette d'identification (8) portant un identifiant associé au sac, et lisible par un système de lecture (17, 18),
- on renseigne dans la base de données (12), par un système informatisé d'acquisition, des informations relatives à l'achat du sac (1) associées à l'identifiant.

7. Programme d'ordinateur comprenant des instructions permettant la mise en œuvre du procédé selon la revendication 5 ou selon la revendication 6 lorsqu'il est exécuté par un processeur.
